# EUROPEAN PATENT SPECIFICATION

(11) **EP 4 441 406 B1**
(45) Date of publication and mention of the grant of the patent: **05.11.2025**
(21) Application number: 22830286.5
(22) Date of filing: 01.12.2022
(51) Int. Cl.: F16K 27/00, F16K 31/05, F16K 31/528, F16K 31/60, F16K 37/00

(54) **VALVE CONTROL APPARATUS AND METHOD**
VENTILSTEUERUNGSVORRICHTUNG UND -VERFAHREN
APPAREIL ET PROCÉDÉ DE COMMANDE DE VANNE

(30) Priority: 03.12.2021 GB 202117509
(43) Date of publication of application: 09.10.2024
(73) Proprietor: Kopva Ltd, Bradford West Yorkshire BD1 4NS (GB)
(72) Inventor: PERDIOS, Ronis, Leeds West Yorkshire LS19 7SP (GB)
(74) Representative: Mohun, Stephen John
(86) International application number: PCT/GB2022/053049
(87) International publication number: WO 2023/099897

(56) References cited:
- WO-A1-2017/112480
- US-A- 5 409 037
- US-A1- 2012 132 838
- US-B1- 11 105 705

## Description

The present invention relates to an apparatus for automatically controlling a valve in a fluid conduit, and to a method of doing so.

When a pipe or an appliance in a property develops a water leak, it is usually necessary to stop the supply of water into the property until the leak is fixed. To do this, a main valve, sometimes referred to as a stopcock, is closed manually. However, there may be a considerable delay between the detection of the leak and the closure of the water supply, particularly when the property is unoccupied. This can lead to damage of the property.

Automated valves of various kinds have been proposed but often have disadvantages either in their reliability or ease of installation.

US 11105705 B1 discloses a valve control apparatus according to the preamble of claim 1.

Embodiments of the present invention aim to provide apparatus for automatically controlling a valve, and a method of doing the same, in which disadvantages of the prior art are at least partly addressed.

The present invention is defined in the attached independent claims, to which reference should now be made. Further, preferred features may be found in the sub-claims appended thereto.

According to one aspect of the present invention, there is provided a valve control apparatus according to claim 1.

The motor part and the actuator part preferably have cooperating portions arranged in use to bear against one another to resist forces tending to move the motor part with respect to the conduit. The cooperating portions may include cooperating surfaces and/or profiles.

In a preferred arrangement, one of the motor part and the actuator part has a cooperating portion comprising a projection, more preferably such as a ridge or lip, and the other of the motor part and the actuator part has a cooperating portion comprising a recess, channel, groove or aperture.

The motor part and the actuator part preferably each have a plurality of cooperating portions, each cooperating portion being arranged in use to cooperate with a counterpart on the other of the motor part and actuator part.

According to the invention, the mounting member comprises a plurality of clip portions for engaging the conduit, which clip portions are arranged to be spaced longitudinally with respect to the conduit when so engaged.

The clip portions may be resilient and are preferably arranged to extend at least partly around the conduit when in the engaged configuration. More preferably, the clip portions are arranged for temporary deformation when engaging the conduit.

The actuator and the motor may be coupled by a pin, or peg, and slot arrangement, in which the pin travels within the slot, with one being arranged to urge the other to movement, wherein the slot has first and second extremities, and wherein the motor is arranged to move the actuator so that the pin is at a first extremity to close the valve and then to move the actuator so that the pin is spaced from the first extremity to allow the actuator to be moved manually.

In a preferred arrangement, the pin is driven by the motor and the slot is part of the actuator. Alternatively, the pin could be located on the actuator and the slot could be located on a component that is driven by the motor.

The conduit may comprise a pipe, more preferably a substantially cylindrical pipe.

The conduit may be a pipe for conducting liquid, such as a water pipe, or may be a gas pipe, such as for conducting fuel or other gas.

The apparatus may be arranged in use to close a valve in the conduit when fluid flow is detected in the conduit which ought not to be present. Such activity may be indicative of a leak in a system to which the conduit is connected.

The apparatus may be arranged for electronic communication, optionally wireless communication, with a remote device to report status and/or activation of the apparatus.

According to another aspect of the present invention, there is provided a method of controlling a valve of a fluid conduit using valve control apparatus according to claim 11.

The -flow of fluid may be detected acoustically.

The actuator and the motor may be coupled by a pin, or peg, and slot arrangement, in which the pin travels within the slot, with one being arranged to urge the other to movement, wherein the slot has first and second extremities, and wherein the method comprises moving the actuator using the motor so that the pin is at a first extremity to close the valve and then moving the actuator so that the pin is spaced from the first extremity to allow subsequent manual movement of the actuator.

The actuator is preferably arranged to move automatically.

The invention may include any combination of the features or limitations referred to herein in accordance with the claims, except such a combination of features as are mutually exclusive, or mutually inconsistent.

A preferred embodiment of the present invention will now be described, by way of example only, with reference to the accompanying diagrammatic drawings, in which:
Figure 1 is a partly exploded view of a valve control apparatus according to an embodiment of the present invention;
Figure 2 shows the apparatus of Figure 1 assembled;
Figure 3 shows a valve actuator part of the apparatus of Figures 1 and 2;
Figure 4 shows a motor driver part of the apparatus of Figures 1 and 2;
Figure 5 shows the apparatus with part of a housing removed;
   and
Figure 6 is a part sectional view of the apparatus.

The following example will be described in relation to a conduit that is a water pipe, but the invention is also applicable with other kinds of conduits for fluid flow, such as gas pipes.

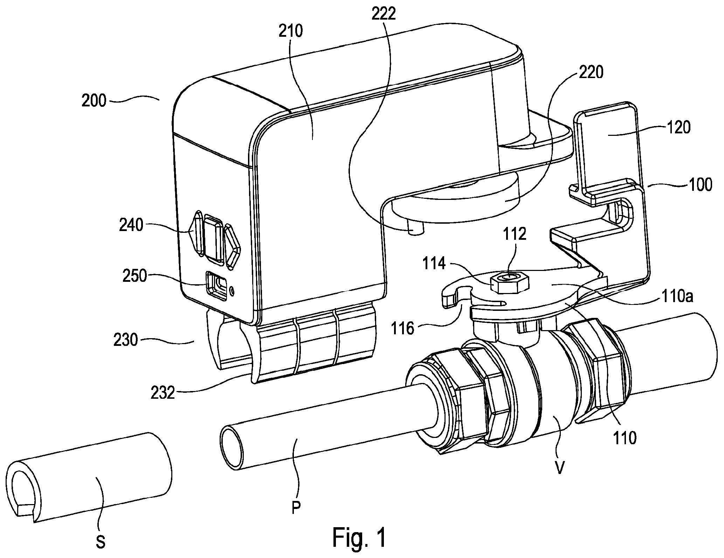

Turning to Figure 1, this is an exploded schematic view of a valve control apparatus according to an embodiment of the present invention. A water pipe is designated P and a shutoff valve portion is designated V in the figure. The valve itself is of a well-known type and includes a closure member (not shown) which is hidden inside the pipe and which is moveable between fully open and fully closed positions. When the valve is open, the fluid in the pipe is permitted to flow. When the valve is closed, no fluid may flow in the pipe.

The valve control apparatus comprises two main parts: a valve actuator part, shown generally at 100 and which is connected mechanically to the valve closure member inside the pipe, and a motor part, shown generally at 200 which is arranged to engage the actuator 100 to operate the valve in use.

The actuator part 100 includes an actuator disc portion 110 through which passes a spindle 112 that engages, and is arranged to turn, the closure member. The spindle is connected to the disc by a nut 114. The disc 110 has an arcuate slot 116 for engaging with the motor part. Integral with the disc portion is a handle portion 120 which is sized and shaped to allow easy manual operation.

The motor part 200 comprises a housing 210 in which is located an electric motor and control circuitry (not shown in this figure). The motor is arranged to drive a rotating drive disc 220 which has a drive pin 222 on an under side and which is radially spaced from the axis of rotation of the drive disc. A mounting portion 230, on the underside of the motor part 200 is arranged in use to grip the pipe P. The mounting portion comprises three resiliently deformable individual clips 232 which grip the pipe P via an optional intermediary sleeve S. The clips 222 are of plastics material and as they are introduced to the pipe/sleeve they initially deform to as to accommodate the width of the pipe/sleeve before closing again somewhat to form a tight engagement with the pipe/sleeve at spaced intervals along the pipe. Control buttons 240 and a comms/charging port 250 are located on the exterior of the housing 210.

When the motor part is mounted on the pipe, the drive pin 222 locates in the arcuate slot 116 to allow the motor to drive the actuator, as will be described below.

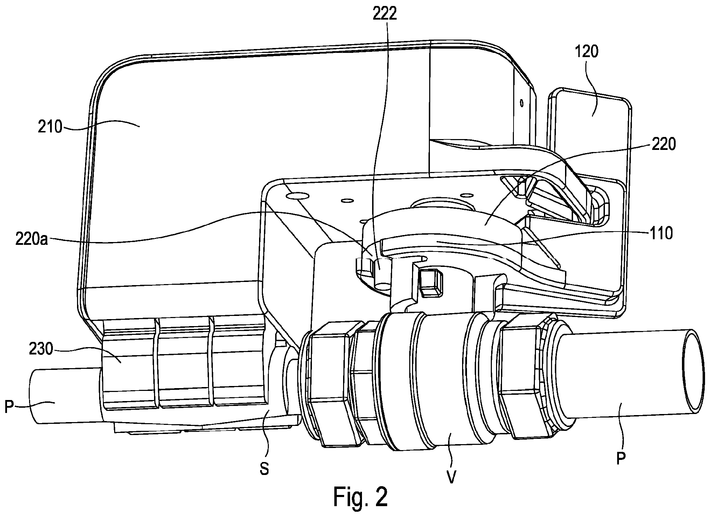

Turning to Figure 2, this shows the valve control apparatus in assembled configuration, with the motor part 200 being mounted on the pipe P and the drive pin 222 of the drive disc being located in the slot 116 of the actuator disc 110.

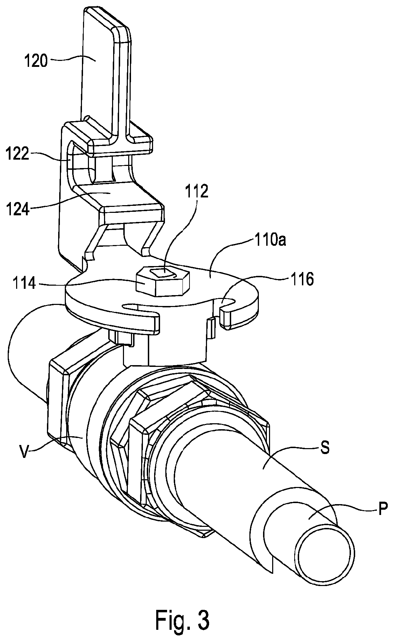

Figure 3 shows the actuator 100 connected to the pipe, without the motor part 200. The handle portion 120 has a recess 122 formed within the handle and integral with the actuator disc 110 and which comprises a surface 124 which extends in a substantially parallel plane with that of the actuator disc itself.

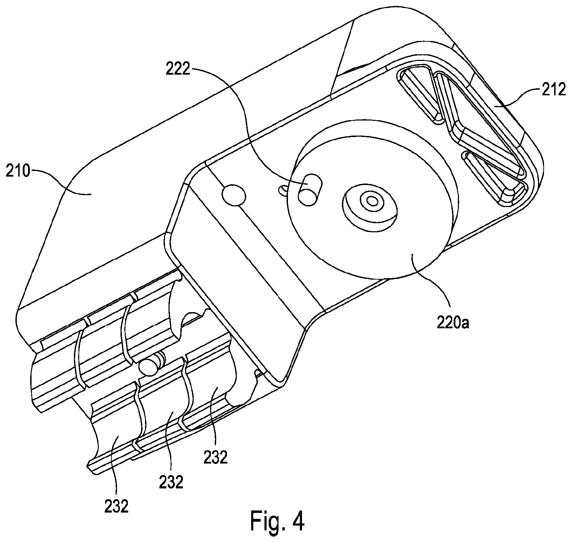

Figure 4 shows the motor part 200 alone and from beneath. Adjacent the drive disc 220 the housing has a lip portion 212 which is for locating within the recess 122 of the handle of the actuator.

A surface 220a of the drive disc 220 and a surface 110a of the handle 110 cooperate during use to resist movement of the motor part 200 with respect to the pipe P. In addition, the lip 212 and the recess 124 cooperate to resist movement of the motor part.

When clipped onto a pipe with clip 232, the apparatus can spin around the central axis of the pipe P. Surface 220 from the drive disc sits on surface 110 of the handle. This stops the rotation around the pipe axis. When the valve V reaches an open or closed position (which is a mechanical stop) the motor becomes stressed and will keep trying to turn. This has a tendency to cause a twist movement causing one side of the housing 210 to lift and the other to drop. Surfaces 110 and 220 act as a pivot point to lift 232 off the pipe. The interaction between lip 212 and the recess which creates surface 124 (as well as the surface above and parallel) stops these twisting forces and so, keep the apparatus held on the pipe.

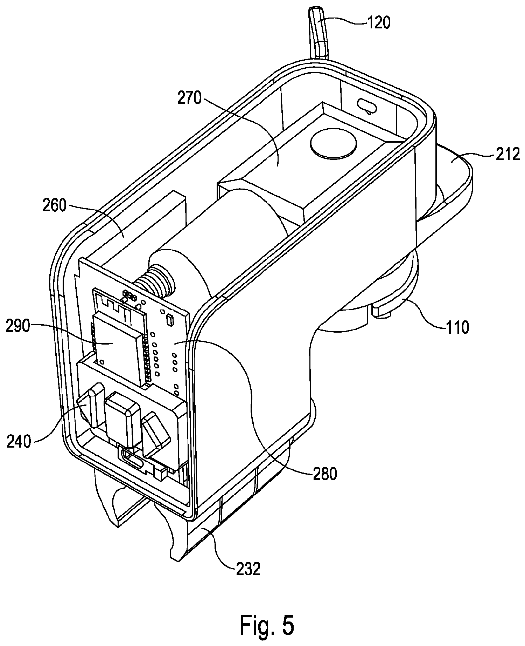

Figure 5 shows the apparatus with part of the housing 210 removed. A re-chargeable battery 260 powers an electric motor 270 which drives the disc 220, and hence moves the pin 222 which in turn rotates the actuator disc 110 to effect closure of the valve. In use, when the pin 222 has rotated the disc 110 to its maximum rotation, for example corresponding to a movement from a fully open to a fully closed configuration of the valve, the pin returns to the opposite end of the slot 116 and stops - i.e. without pushing on the slot. This is to allow a user the space within the slot to manually rotate the handle - and hence the valve - back to an open position, thereby overriding the apparatus. Without this functionality, the user would not be able to turn the handle independently of the motor. A printed circuit board (PCB) 280 has control circuitry 290, for controlling the operation of the apparatus.

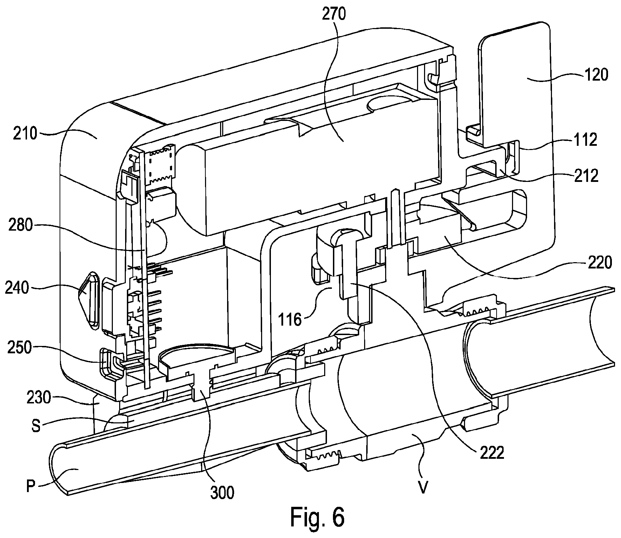

Figure 6 is a part-sectional view of the apparatus. An acoustic sensor/transducer (not shown) is located in a circular recess of an acoustic transfer pin 300 which is in direct contact with either pipe P or optional sleeve S. The transducer is electrically connected to the control circuitry 290 and, in use, monitors the pipe P for sounds of flowing fluid - e.g. water - in the pipe. If flow is detected via the transducer when there ought to be no flow, then the control circuitry 290 causes the motor to close the valve.

The control buttons 240 allow a user to activate and deactivate the apparatus, to open and close the valve, to reset the position of the drive pin, to alter the sensitivity of the transducer and other actions. The charging/comms port 250 allows the battery to be recharged and also permits the downloading of an operational history via a cable from an on-board memory (not shown). The apparatus may also communicate wirelessly, for example to an external communications device, such as a phone or tablet, optionally via an app loaded on the external device.

The mounting portion 230 must react the turning force against the pipe and by splitting it into a plurality of separated elements, in this case the clip portions 232, some flexure of the portion 230 is permitted and the load is better distributed, allowing a good grip to be maintained on the pipe during operation, with a reduced risk of becoming pushed or twisted off the pipe.

The apparatus is only mounted on one side of the valve - i.e. upstream or downstream of the valve. This makes for an easy installation and is ideal where space is limited. It also allows a user to remove the apparatus 200 easily and still have manual control over their water which is advantageous.

Furthermore, the apparatus In accordance with this invention does not contact any fluid flowing in the conduit. Therefore, the apparatus does not require specific approval for use with e.g. water, and can be used with existing, industry approved valves.

Whilst endeavouring in the foregoing specification to draw attention to those features of the invention believed to be of particular importance, it should be understood that the applicant claims protection in respect of any patentable feature or combination of features referred to herein, and/or shown in the drawings and as defined by the claims, whether or not particular emphasis has been placed thereon.

## Claims

1. A valve control apparatus, for controlling a valve (V) in a fluid conduit, the valve comprising a closure member moveable between an open position, in which fluid may flow in the conduit, and a closed position, in which fluid may not flow in the conduit, wherein the apparatus comprises an actuator part (100), including an actuator connectable to the closure member and arranged, when so connected, to control the movement of the closure member, a motor part (200), including a motor for driving the actuator and a fluid-flow sensor for detecting the flow of fluid in the conduit, wherein when the sensor detects the flow of fluid in the conduit the motor drives the actuator, causing the closure member to move to the closed position, and wherein the apparatus includes a mounting member (230) for mounting the apparatus on the conduit, wherein the mounting member (230) is arranged to engage the conduit on only one of an upstream side or a downstream side of the valve (V),
**characterised by** the mounting member (230) comprising a plurality of clip portions (232) for engaging the conduit, which clip portions (232) are arranged to be spaced longitudinally with respect to the conduit when so engaged.

2. Apparatus according to Claim 1, wherein the clip portions (232) are resilient and are arranged to extend at least partly around the conduit when in the engaged configuration.

3. A valve control apparatus according to Claim 1 or 2, wherein the sensor is an acoustic sensor arranged to sense the flow of fluid in the conduit acoustically.

4. A valve control apparatus according to any preceding claim, wherein the actuator and the motor are coupled by a pin (222), or peg, and slot arrangement (116), in which the pin (222) travels within the slot (116), with one being arranged to urge the other to movement, wherein the slot (116) has first and second extremities, and wherein the motor is arranged to move the actuator so that the pin (222) is at a first extremity to close the valve (V) and then to move the actuator so that the pin is spaced from the first extremity to allow the actuator to be moved manually.

5. Apparatus according to Claim 4, wherein the pin (222) is driven by the motor and the slot (116) is part of the actuator.

6. Apparatus according to Claim 4, wherein the pin (222) is located on the actuator and the slot (116) is located on a component that is driven by the motor.

7. Apparatus according to any of the preceding claims, wherein the conduit comprises a substantially cylindrical pipe (P).

8. Apparatus according to Claim 7, wherein the conduit comprises a pipe (P) for conducting liquid, such as a water pipe, or gas pipe, such as for conducting fuel or other gas.

9. Apparatus according to any of the preceding claims, wherein the apparatus is arranged in use to close a valve (V) in the conduit when fluid flow is detected in the conduit which ought not to be present.

10. Apparatus according to any of the preceding claims, wherein the apparatus is arranged for electronic communication, optionally wireless communication, with a remote device to report status and/or activation of the apparatus.

11. A method of controlling a valve (V) of a fluid conduit using valve control apparatus, the valve comprising a closure member moveable between an open position, in which fluid may flow in the conduit, and a closed position, in which fluid may not flow in the conduit, wherein the method comprises connecting an actuator part (100), including an actuator to the closure member and driving the actuator with a motor of a motor part (200), and detecting the flow of fluid in the conduit using a sensor, wherein when the sensor detects the flow of fluid in the conduit the motor drives the actuator, causing the closure member to move to the closed position, **characterised by** mounting the apparatus on the conduit by engaging the conduit on only one of an upstream side or a downstream side of the valve with a mounting member (230) comprising a plurality of clip portions (232) for engaging the conduit, which clip portions (232) are arranged to be spaced longitudinally with respect to the conduit when so engaged.

12. A method according to Claim 11, wherein the flow of fluid is detected acoustically.

13. A method according to Claim 11 or 12, wherein the actuator and the motor are coupled by a pin (222), or peg, and slot arrangement (116), in which the pin (222) travels within the slot (116), with one being arranged to urge the other to movement, wherein the slot (116) has first and second extremities, and wherein the method comprises moving the actuator using the motor so that the pin (222) is at a first extremity to close the valve (V) and then moving the actuator so that the pin (222) is spaced from the first extremity to allow subsequent manual movement of the actuator.

## Patentansprüche

1. Ventilsteuerungsvorrichtung zum Steuern eines Ventils (V) in einer Fluidleitung, wobei das Ventil ein Verschlusselement umfasst, das zwischen einer offenen Position, in der Fluid in der Leitung fließen kann, und einer geschlossenen Position, in der Fluid in der Leitung nicht fließen kann, bewegbar ist, wobei die Vorrichtung einen Stellgliedteil (100), einschließlich eines Stellglieds, der ein mit dem Verschlusselement verbindbar ist, und, wenn er so verbunden ist, dazu angeordnet ist, die Bewegung des Verschlusselements zu steuern, einen Motorteil (200), einschließlich eines Motors, zum Antreiben des Stellglieds und einen Fluidflusssensor zum Erkennen des Fluidflusses in der Leitung umfasst, wobei, wenn der Sensor den Fluidfluss in der Leitung erkennt, der Motor das Stellglied antreibt, wobei bewirkt wird, dass sich das Verschlusselement in die geschlossene Position bewegt, und wobei die Vorrichtung ein Montageelement (230) zum Montieren der Vorrichtung an der Leitung beinhaltet, wobei das Montageelement (230) dazu angeordnet ist, mit der Leitung nur an einer von einer stromaufwärtigen Seite oder einer stromabwärtigen Seite des Ventils (V) in Eingriff zu treten,
**dadurch gekennzeichnet, dass** das Montageelement (230) eine Vielzahl von Klammerabschnitten (232) zum Eingriff in die Leitung umfasst, wobei die Klammerabschnitte (232) dazu angeordnet sind, in Längsrichtung in Bezug auf die Leitung beabstandet zu sein, wenn sie so in Eingriff stehen.

2. Vorrichtung nach Anspruch 1, wobei die Klammerabschnitte (232) elastisch sind und dazu angeordnet sind, sich zumindest teilweise um die Leitung zu erstrecken, wenn sie sich in der Eingriffskonfiguration befinden.

3. Ventilsteuerungsvorrichtung nach Anspruch 1 oder 2, wobei der Sensor ein akustischer Sensor ist, der dazu angeordnet ist, den Fluidfluss in der Leitung akustisch zu erfassen.

4. Ventilsteuerungsvorrichtung nach einem vorhergehenden Anspruch, wobei das Stellglied und der Motor durch eine Stift- (222), oder Zapfen-, und-Schlitzanordnung (116) gekoppelt sind, in der der Stift (222) innerhalb des Schlitzes (116) wandert, wobei einer dazu angeordnet ist, den anderen zur Bewegung zu treiben, wobei der Schlitz (116) ein erstes und ein zweites Ende aufweist, und wobei der Motor dazu angeordnet ist, das Stellglied so zu bewegen, dass sich der Stift (222) an einem ersten Ende befindet, um das Ventil (V) zu schließen, und dann das Stellglied so zu bewegen, dass der Stift von dem ersten Ende beabstandet ist, um zu ermöglichen, dass das Stellglied manuell bewegt wird.

5. Vorrichtung nach Anspruch 4, wobei der Stift (222) durch den Motor angetrieben wird und der Schlitz (116) Teil des Stellglieds ist.

6. Vorrichtung nach Anspruch 4, wobei sich der Stift (222) auf dem Stellglied befindet und sich der Schlitz (116) auf einer Komponente befindet, die durch den Motor angetrieben wird.

7. Vorrichtung nach einem der vorhergehenden Ansprüche, wobei die Leitung ein im Wesentlichen zylindrisches Rohr (P) umfasst.

8. Vorrichtung nach Anspruch 7, wobei die Leitung ein Rohr (P) zum Leiten von Flüssigkeit, wie etwa ein Wasserrohr, oder ein Gasrohr, wie etwa zum Leiten von Brennstoff oder anderem Gas, umfasst.

9. Vorrichtung nach einem der vorhergehenden Ansprüche, wobei die Vorrichtung im Gebrauch dazu angeordnet ist, ein Ventil (V) in der Leitung zu schließen, wenn ein Fluidfluss in der Leitung erkannt wird, der nicht vorhanden sein sollte.

10. Vorrichtung nach einem der vorhergehenden Ansprüche, wobei die Vorrichtung für elektronische Kommunikation, optional drahtlose Kommunikation, mit einer entfernten Gerät angeordnet ist, um Status und/oder Aktivierung der Vorrichtung zu melden.

11. Verfahren zum Steuern eines Ventils (V) einer Fluidleitung unter Verwendung einer Ventilsteuerungsvorrichtung, wobei das Ventil ein Verschlusselement umfasst, das zwischen einer offenen Position, in der Fluid in der Leitung fließen kann, und einer geschlossenen Position, in der Fluid nicht in der Leitung fließen kann, bewegbar ist, wobei das Verfahren das Verbinden eines Stellgliedteils (100), einschließlich eines Stellglieds, mit dem Verschlusselement und das Antreiben des Stellglieds mit einem Motor eines Motorteils (200) und das Erkennen des Fluidflusses in die Leitung unter Verwendung eines Sensors umfasst, wobei, wenn der Sensor den Fluidfluss in der Leitung erkennt, der Motor das Stellglied antreibt, wobei bewirkt wird, dass sich das Verschlusselement in die geschlossene Position bewegt, **dadurch gekennzeichnet, dass** die Vorrichtung an der Leitung montiert wird, indem die Leitung nur an einer von einer stromaufwärtigen Seite oder einer stromabwärtigen Seite des Ventils mit einem Montageelement (230) in Eingriff gebracht wird, das eine Vielzahl von Klammerabschnitten (232) zum Eingriff in die Leitung umfasst, wobei die Klammerabschnitte (232) dazu angeordnet sind, in Längsrichtung in Bezug auf die Leitung beabstandet zu sein, wenn sie so in Eingriff stehen.

12. Verfahren nach Anspruch 11, wobei der Fluidfluss akustisch erkannt wird.

13. Verfahren nach Anspruch 11 oder 12, wobei das Stellglied und der Motor durch eine Stift-(222), oder Zapfen-, und-Schlitzanordnung (116) gekoppelt sind, in der der Stift (222) innerhalb des Schlitzes (116) wandert, wobei einer dazu angeordnet ist, den anderen zur Bewegung zu treiben, wobei der Schlitz (116) ein erstes und ein zweites Ende aufweist, und wobei das Verfahren das Bewegen des Stellglieds unter Verwendung des Motors, sodass sich der Stift (222) an einem ersten Ende befindet, um das Ventil (V) zu schließen, und dann das Bewegen des Stellglieds, sodass der Stift (222) von dem ersten Ende beabstandet ist, um eine nachfolgende manuelle Bewegung des Stellglieds zu ermöglichen, umfasst.

## Revendications

1. Appareil de commande de vanne, pour commander une vanne (V) dans un conduit de fluide, la vanne comprenant un élément de fermeture mobile entre une position ouverte, dans laquelle du fluide peut s'écouler dans le conduit, et une position fermée, dans laquelle du fluide peut ne pas s'écouler dans le conduit, dans lequel l'appareil comprend une partie d'actionneur (100), comprenant un actionneur pouvant être connecté à l'élément de fermeture et agencé, lorsqu'il est ainsi connecté, pour commander le déplacement de l'élément de fermeture, une partie de moteur (200), comprenant un moteur pour entraîner l'actionneur et un capteur d'écoulement de fluide pour détecter l'écoulement de fluide dans le conduit, dans lequel lorsque le capteur détecte l'écoulement de fluide dans le conduit, le moteur entraîne l'actionneur, provoquant le déplacement de l'élément de fermeture vers la position fermée, et dans lequel l'appareil comprend un élément de montage (230) pour monter l'appareil sur le conduit, dans lequel l'élément de montage (230) est agencé pour mettre en prise le conduit sur un seul d'un côté amont ou d'un côté aval de la vanne (V),
**caractérisé en ce que** l'élément de montage (230) comprenant une pluralité de portions d'attache (232) destinées à venir en prise avec le conduit, lesdites portions d'attache (232) étant agencées pour être espacées longitudinalement par rapport au conduit lorsqu'elles viennent ainsi en prise.

2. Appareil selon la revendication 1, dans lequel les portions d'attache (232) sont élastiques et sont agencées pour s'étendre au moins partiellement autour du conduit lorsqu'elles sont dans la configuration en prise.

3. Appareil de commande de vanne selon la revendication 1 ou 2, dans lequel le capteur est un capteur acoustique agencé pour détecter acoustiquement l'écoulement de fluide dans le conduit.

4. Appareil de commande de vanne selon l'une quelconque des revendications précédentes, dans lequel l'actionneur et le moteur sont couplés par une broche (222), ou une cheville, et un agencement de fente (116), dans lequel la broche (222) se déplace à l'intérieur de la fente (116), l'un étant agencé pour pousser l'autre à se déplacer, dans lequel la fente (116) a une première et une seconde extrémités, et dans lequel le moteur est agencé pour déplacer l'actionneur de sorte que la broche (222) se trouve à une première extrémité pour fermer la vanne (V), puis pour déplacer l'actionneur de sorte que la broche se trouve espacée de la première extrémité pour permettre à l'actionneur d'être déplacé manuellement.

5. Appareil selon la revendication 4, dans lequel la broche (222) est entraînée par le moteur et la fente (116) fait partie de l'actionneur.

6. Appareil selon la revendication 4, dans lequel la broche (222) est située sur l'actionneur et la fente (116) est située sur un composant qui est entraîné par le moteur.

7. Appareil selon l'une quelconque des revendications précédentes, dans lequel le conduit comprend un tuyau sensiblement cylindrique (P).

8. Appareil selon la revendication 7, dans lequel le conduit comprend un tuyau (P) pour conduire un liquide, tel qu'un tuyau d'eau, ou un tuyau de gaz, tel qu'un tuyau pour conduire un combustible ou un autre gaz.

9. Appareil selon l'une quelconque des revendications précédentes, dans lequel l'appareil est agencé lors de l'utilisation pour fermer une vanne (V) dans le conduit lorsqu'un écoulement de fluide est détecté dans le conduit qui ne devrait pas être présent.

10. Appareil selon l'une quelconque des revendications précédentes, dans lequel l'appareil est agencé pour une communication électronique, éventuellement une communication sans fil, avec un dispositif distant pour signaler l'état et/ou l'activation de l'appareil.

11. Procédé de commande d'une vanne (V) d'un conduit de fluide utilisant un appareil de commande de vanne, la vanne comprenant un élément de fermeture mobile entre une position ouverte, dans laquelle le fluide peut s'écouler dans le conduit, et une position fermée, dans laquelle le fluide peut ne pas s'écouler dans le conduit, dans lequel le procédé comprend la connexion d'une partie d'actionneur (100), comprenant un actionneur, à l'élément de fermeture et entraînant l'actionneur avec un moteur d'une partie de moteur (200), et la détection de l'écoulement de fluide dans le conduit à l'aide d'un capteur, dans lequel lorsque le capteur détecte l'écoulement de fluide dans le conduit, le moteur entraîne l'actionneur, provoquant le déplacement de l'élément de fermeture vers la position fermée, **caractérisé par** le montage de l'appareil sur le conduit en mettant en prise le conduit sur un seul d'un côté amont ou d'un côté aval de la vanne avec un élément de montage (230) comprenant une pluralité de portions d'attache (232) destinées à venir en prise avec le conduit, lesdites portions d'attache (232) étant agencées pour être espacées longitudinalement par rapport au conduit lorsqu'elles sont ainsi mises en prise.

12. Procédé selon la revendication 11, dans lequel l'écoulement de fluide est détecté acoustiquement.

13. Procédé selon la revendication 11 ou 12, dans lequel l'actionneur et le moteur sont couplés par une broche (222), ou une cheville, et un agencement de fente (116), dans lequel la broche (222) se déplace à l'intérieur de la fente (116), l'un étant agencé pour pousser l'autre à se déplacer, dans lequel la fente (116) a une première et une seconde extrémités, et dans lequel le procédé comprend le déplacement de l'actionneur à l'aide du moteur de sorte que la broche (222) se trouve à une première extrémité pour fermer la vanne (V), puis le déplacement de l'actionneur de sorte que la broche (222) se trouve espacée de la première extrémité pour permettre un mouvement manuel ultérieur de l'actionneur.
